**Europäisches Patentamt**

**European Patent Office**

**Office européen des brevets**

(19)

(11) Veröffentlichungsnummer: **0 178 686**
**A2**

(12) # EUROPÄISCHE PATENTANMELDUNG

(21) Anmeldenummer: **85113284.5**

(22) Anmeldetag: **19.10.85**

(51) Int. Cl.⁴: **A 21 C 9/04**

(30) Priorität: **19.10.84 DE 8430714 U**

(43) Veröffentlichungstag der Anmeldung:
**23.04.86 Patentblatt 86/17**

(84) Benannte Vertragsstaaten:
**BE DE FR GB IT NL**

(71) Anmelder: **Hecrona Bäckereimaschinen GmbH**
**Kalanderstrasse 19**
**D-4150 Krefeld(DE)**

(72) Erfinder: **Nacken, Hans**
**Rosental 13**
**D-4154 Tönisvorst 1(DE)**

(74) Vertreter: **Stark, Walter, Dr.-Ing.**
**Moerser Strasse 140**
**D-4150 Krefeld(DE)**

(54) Vorrichtung zum Aufbringen von Zusatzmitteln, insbesondere Creamstreuseln, auf ein Teigband.

(57) Die Erfindung betrifft eine Vorrichtung zum Aufbringen von Zusatzmitteln, insbesondere Creamstreuseln, auf ein Teigband, mit einem trichterförmigen Streubehälter, der am unteren Ende einen Streuspalt aufweist, und mit wenigstens einem Förderband für das Zusatzmittel. Damit Streusel unterschiedlicher Feinheitsgrade ohne zwischenzeitliche Verdichtung und anschließende Auflockerung verarbeitet und auf das Teigband aufgetragen werden können, sollen auf den Innenseiten von wenigstens zwei einander gegenüberliegenden Trichterwänden des Streubehälters Stahlgeflechtbänder angeordnet sein, die jeweils über Umlenkrollen am oberen Ende der Trichterwände sowie über den Streuspalt bildende Walzen am unteren Ende der Trichterwände geführt sind, wobei die Umlenkrollen und/oder die Walzen antreibbar sind.

FIG.1

EP 0 178 686 A2

## Dr.-Ing. WALTER STARK

### PATENTANWALT

**0178686**

Moerser Straße 140    D-4150 Krefeld 1    ☎ (02151) 28222 u. 20469    ℡ 8 53 578

Hecrona Bäckereimaschinen GmbH, Kalanderstr. 19,
4150 Krefeld

## Vorrichtung zum Aufbringen von Zusatzmitteln, insbesondere Creamstreuseln, auf ein Teigband

Die Erfindung betrifft eine Vorrichtung zum Aufbringen von Zusatzmitteln, insbesondere Creamstreuseln, auf ein Teigband, mit einem trichterförmigen Streubehälter, der am unteren Ende einen Streuspalt aufweist und mit wenigstens einem Förderband für das Zusatzmittel.

Für die Herstellung von Dauerbackwaren, insbesondere Cream-Crackern, ist es üblich, einen Streusel zwischen zwei Teigbänder zu streuen und diesen dann bei der vorgenannten Bearbeitung in einem oder mehreren Walzwerken als Lagentrennung auszunutzen. Die Lagentrennung ergibt die Blättrigkeit dieser Art Produkte. Der Streusel besteht hauptsächlich aus Fett und Mehl. Bei Mengungen von Salz, Ammonium, Geschmacksstoffen und dergleichen werden in rezeptüblichen Mengen beigefügt.

Eine Vorrichtung der eingangs beschriebenen Gattung (DE-AS 20 58 246) weist einen trichterförmigen Streubehälter oberhalb eines waagerecht laufenden Förderbandes auf. Das Förderband kann ein glattes oder profiliertes Band sein. Zwischen dem Streube-

Deutsche Bank AG Krefeld 103/1525 BLZ 320 700 80 · Sparkasse Krefeld 305 722 BLZ 320 500 00 · Postscheck Essen 4055-431 BLZ 360 100 43

- 2 -

hälter und dem Förderband ist ein Streuspalt
gebildet, der ggf. einstellbar ist. Durch Einstellung des Streuspaltes und der Geschwindigkeit
des Förderbandes läßt sich die Streumenge bestimmen.
Da sich der Streusel innerhalb des Streubehälters
verdichtet, müssen im Streubehälter Einrichtungen
für die Auflockerung des Streusels vorgesehen
werden. Außerdem muß am unteren Ende des Streubehälters ein beweglicher Rakel angeordnet werden,
der den Austragspalt des Streubehälters freihält.

Ferner kennt man Vorrichtungen, die mit zwei/oder
mehr Auspreßwalzen arbeiten. Die Oberfläche einer
Auspreßwalze ist strukturiert, z.B. gekordelt,
so daß sich auf dieser Auspreßwalze ein Mantel
aus verdichtetem Streusel aufbaut. Der verdichtete
Streusel wird dann mittels einer Messer-Schlagwalze
von der Oberfläche der Auspreßwalze getrennt
und dem Teigband übergeben. Auch bei dieser Ausführung benötigt ein trichterförmiger Streubehälter
oberhalb der Auspreßwalzen auflockernde Einrichtungen, um Brückenbildungen zu vermeiden. Die auszutragende Streuselmenge ist begrenzt, weil der Streuselmantel auf der strukturierten Auspreßwalze nicht
beliebig dick gemacht werden kann und die Drehzahl
der Walzen nicht beliebig gesteigert werden kann.

Aufgabe der Erfindung ist es, Streusel unterschiedlicher Feinheitsgrade ohne zwischenzeitliche
Verdichtung und anschließende Auflockerung auf
ein Teigband zu übertragen.

Diese Aufgabe wird bei einer Vorrichtung der
eingangs beschriebenen Gattung dadurch gelöst, daß auf den Innenseiten von wenigstens zwei einander
gegenüberliegenden Trichterwänden des Streubehälters
Stahlgeflechtbänder angeordnet sind, die jeweils
über Umlenkrollen am oberen Ende der Trichterwände
sowie über den Streuspalt bildende Walzen am
unteren Ende der Trichterwände geführt sind,
wobei die Umlenkrollen und/oder die Walzen antreibbar
sind.

Bei der erfindungsgemäßen Vorrichtung übernehmen
die Stahlgeflechtbänder innerhalb des trichterförmigen Streugehäuses den Transport der Streusel,
wobei Verdichtungen und Brückenbildung im Streubehälter nicht zu befürchten sind. Im Bereich der
Walzen übernehmen die Stahlgeflechtbänder die
Dosierung und Verteilung der ausgetragenen Streusel.
Da Stahlgeflechtbänder im Verhältnis zu den Körnungen
der Streusel eine verhältnismäßig große Maschenweite
besitzen, lösen sich die Streusel hinter dem
Streuspalt zwanglos von den Stahlgeflechtbändern
und/oder den Walzen.

Die Dosierung läßt sich auf einfache Weise verändern, wenn eine der Walzen zur Veränderung des
Streuspaltes verstellbar ist. In Kombination
dazu können auch Umlenkrollen und/oder Walzen
der beiden Stahlgeflechtbänder mit unterschiedlicher Drehzahl antreibbar sein, so daß im Ergebnis
auch eine Feinregelung der Streumenge möglich
ist.

Vorzugsweise sollten die Stahlgeflechtbänder
wenigstens an einem Teil ihrer maschenbildenden
Stege eingeprägte Nocken aufweisen, die eine
Auflösung des Streusels in feine Partikel fördern.

Im folgenden wird ein in der Zeichnung dargestelltes
Ausführungsbeispiel der Erfindung erläutert;
es zeigen:

Fig. 1 einen Schnitt durch eine Vorrichtung zum
Aufbringen von Creamstreuseln auf ein
Teigband,

Fig. 2 eine Draufsicht auf einen Abschnitt eines
Stahlgeflechtbandes,

Fig. 3 eine andere Ausführung des Gegenstandes
nach Fig. 2.

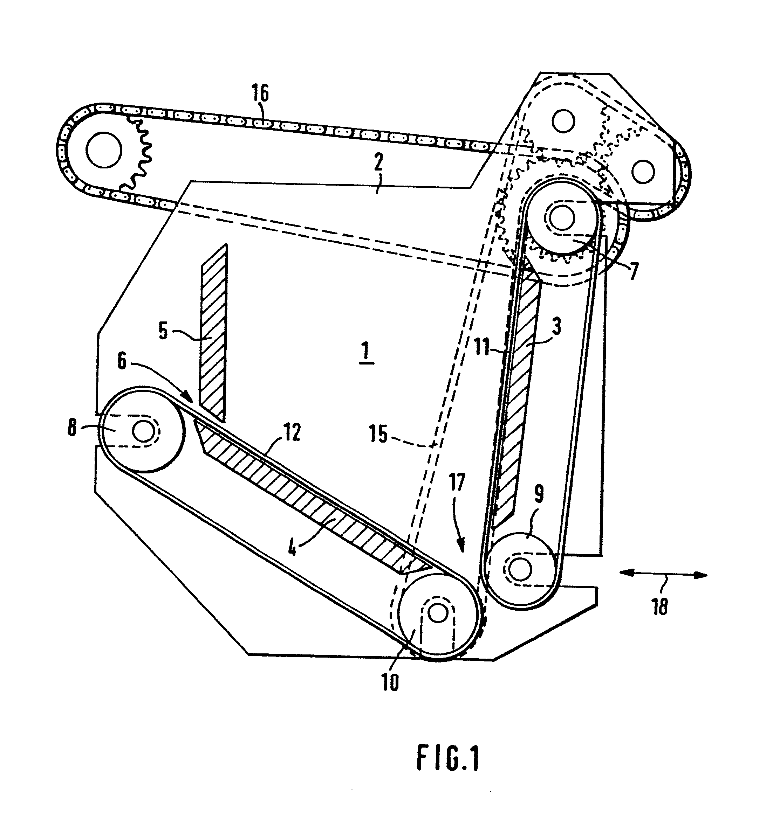

Die dargestellte Vorrichtung besitzt einen trichterförmigen Streubehälter 1 mit zwei Stirnwänden,
von denen in der dargestellten Schnittzeichnung
nach Fig. 1 lediglich eine Stirnwand 2 erkennbar
ist, sowie zwei Trichterwänden 3,4 und einer
weiteren Wand 5. Die Trichterwände 3,4 und die
Wand 5 sind wassergekühlt. Die Trichterwand 3
erstreckt sich ebenso wie die Wand 5 im wesentlichen
vertikal. Die Trichterwand 4 erstreckt sich unter
einem Winkel zur Horizontalen, sie endet unter
bildung eines Spaltes 6 unterhalb der Wand 5.

Im Bereich der oberen Enden der Trichter 3 bzw. 4
sind Umlenkrollen 7 bzw. 8 und im Bereich der
unteren Enden der Trichterwände 3 bzw. 4 sind
Walzen 9 bzw. 10 angeordnet.

Über die Umlenkrolle 7 und die zugeordnete Walze 9
einerseits sowie über die Umlenkrolle 8 und die
zugeordnete Walze 10 andererseits sind endlose

**0178686**

- 5 -

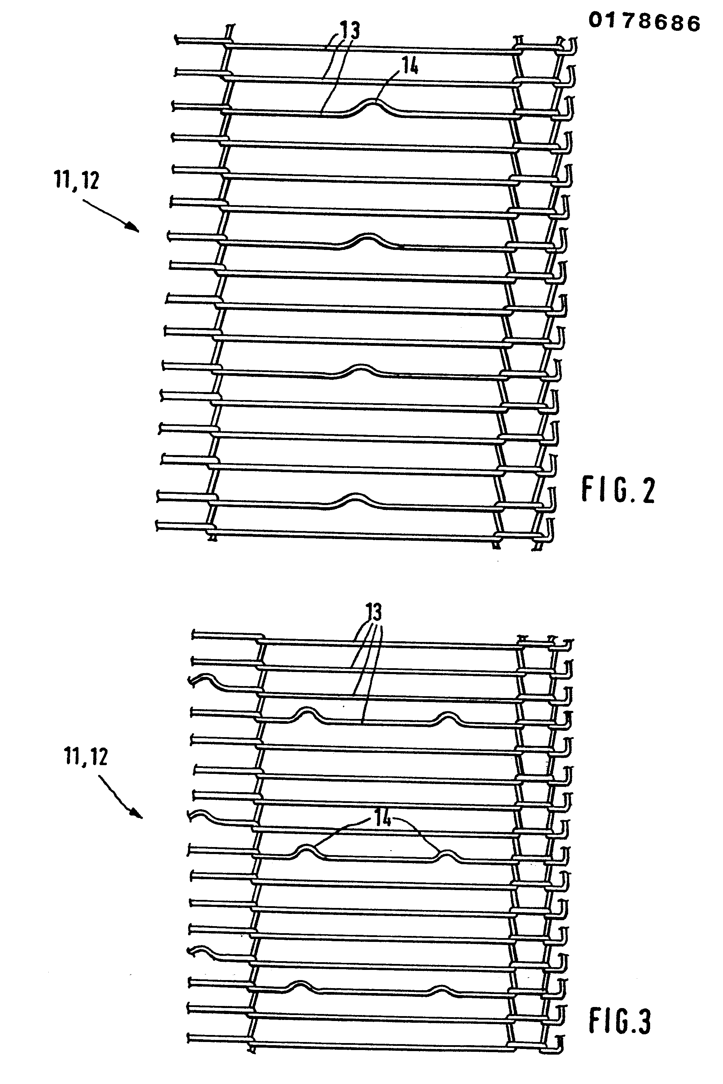

Stahlgeflechtbänder 11,12 geführt, deren eines
Trum jeweils dicht über die Innenseiten der Trichterwände 3 bzw. 4 geführt ist, während ihr anderes
Trum außerhalb der jeweiligen Trichterwände 3
bzw. 4 geführt ist. Den Aufbau der Stahlgeflechtbänder 11,12 entnimmt man aus den Fig. 2 und 3.
Man erkennt, daß die Stahlgeflechtbänder 11,12
wenigstens an einem Teil ihrer maschenbildenden
Stege 13 eingeprägte Nocken 14 aufweisen.

Bei der dargestellten Ausführung sind die Walzen
9 bzw. 10 über zugeordnete Kettentriebe 14,15,16
angetrieben. Nicht dargestellt ist, daß die Walzen
9,10 mit unterschiedlicher Drehzahl antreibbar
sind.

Die beiden Walzen 9,10 definieren zwischen sich
einen Streuspalt 17 des Streugehäuses 1. Der
Streuspalt 17 kann dadurch verändert werden,
daß die unter der im wesentlichen vertikalen
Trichterwand 3 angeordnete Walze 9 in horizontaler
Richtung (Pfeil 18) verschiebbar ist.

Durch Veränderung der Größe des Streuspaltes 17
einerseits und durch entsprechende Einstellung
der Drehzahlen der Walzen 9,10 läßt sich die
Streumenge in weiten Grenzen regeln. Bei gleicher
Drehzahl der Walzen 9,10, insbesondere aber bei
größerer Drehzahl der Walze 9 und damit Voreilung
des Stahlgeflechtbandes 11 sorgen die Nocken 13
der Stahlgeflechtbänder 11,12 für eine feine
Auflösung des aus dem Streuspelt 17 ausgetragenen
Streusels.

Ansprüche:

1 Vorrichtung zum Aufbringen von Zusatzmitteln,
insbesondere Creamstreuseln, auf ein Teigband,
mit einem trichterförmigen Streubehälter, der
am unteren Ende einen Streuspalt aufweist,
und mit wenigstens einem Förderband für das
Zusatzmittel, dadurch gekennzeichnet, daß auf
den Innenseiten von wenigstens zwei einander
gegenüberliegenden Trichterwänden (3,4) des
Streubehälters (1) Stahlgeflechtbänder (11,12)
angeordnet sind, die über Umlenkrollen (7,8)
am oberen Ende der Trichterwände (3,4) sowie
über den Streuspalt (17) bildende Walzen (9,10)
am unteren Ende der Trichterwände (3,4) geführt
sind, wobei die Umlenkrollen (7,8) und/oder
die Walzen (9,10) angetrieben sind.

2. Vorrichtung nach Anspruch 1, dadurch gekennzeichnet, daß eine der Walzen (9,10) zur Veränderung
des Streuspaltes (17) verstellbar ist.

3. Vorrichtung nach Anspruch 1 oder 2, dadurch
gekennzeichnet, daß die Umlenkrollen (7,8)
und/oder Walzen (9,10) der beiden Stahlgeflechtbänder (11,12) mit unterschiedlicher Drehzahl
antreibbar sind.

**0178686**

- 2 -

4. Vorrichtung nach einem der Ansprüche 1 bis 3, dadurch gekennzeichnet, daß die Stahlgeflechtbänder (11,12) wenigstens an einem Teil ihrer maschenbildenden Stege (13) eingeprägte Nocken (14) aufweisen.

0178686

FIG.1

be 84 334

0178686

FIG.2

FIG.3